# EUROPÄISCHE PATENTSCHRIFT

(11) **EP 1 258 396 B1**
(45) Veröffentlichungstag und Bekanntmachung des Hinweises auf die Patenterteilung: **01.12.2004**
(21) Anmeldenummer: 02018052.7
(22) Anmeldetag: 18.09.1998
(51) Int. Cl.: B60R 5/04

(54) **Abdeckung für einen Fahrzeugladeraum**
Covering for a vehicle load compartment
Recouvrement pour l'espace de chargement de véhicule

(30) Priorität: 20.09.1997 DE 19741628
(43) Veröffentlichungstag der Anmeldung: 20.11.2002
(62) Teilanmeldung aus: 98952602.5
(73) Patentinhaber: Volkswagen Aktiengesellschaft, 38436 Wolfsburg (DE)
(72) Erfinder: Hofmann, Gustav, 38114 Braunschweig (DE); Andronis, Odysseus, 38102 Braunschweig (DE); Wiesner, Uwe, 38112 Braunschweig (DE)
(74) Vertreter: Liebl, Thomas, Dipl.-Ing.

(56) Entgegenhaltungen:
- FR-A- 2 743 035

## Beschreibung

Die Erfindung betrifft eine Abdeckung für einen Fahrzeugladeraum gemäß dem Oberbegriff des Patentanspruchs 1.

Abdeckungen sind beispielsweise bekannt aus der DE-3734774-A1 (B60R 7/04). Die Abdeckung ist als Hutablage ausgeführt, die das Angebot von Ablagemöglichkeiten im Fahrzeug bei guter Zugänglichkeit ergänzt.

In der DE 3243802-A1 (B60R 7/04) ist die Abdeckung als eine Hutablage ausgeführt, die sich zwischen den Fondsitzen und der Heckscheibe eines Kraftfahrzeugs erstreckt. In die als Innenverkleidungselement ausgeführte Hutablage ist eine Ablageschale eingesetzt, die durch einen Deckel verschließbar ist. Der Deckel ist dabei materialeinheitlicher Bestandteil der Hutablagenverkleidung. Die Hutablage selbst ist als Auflageteil ausgeführt und deckt die Ablageschale nur mit einem geringen Anteil ihrer Oberfläche ab.

Die DE-4442042-A1 und EP-0556100-B1 (beide B60R 7/02) zeigen jeweils einen als Stauvorrichtung ausgeführten Behälter, der in einem Bereich im vorderen oberen Abschnitt des Kofferraums eines Fahrzeuges angebracht ist. Der nach Art einer Hub- oder Schwenklade ausgeführte Behälter ist bei geöffneter Kofferraumhaube zugänglich und kann zur Ablage unterschiedlichster Gegenstände genutzt werden. Die dort gezeigte Behälteranordnung schränkt die Stauraumhöhe ein, auch wenn der Nachteil durch eine Stauraumhöheneinstellung zumindest zeitweise eingeschränkt beseitigt werden kann.

Die DE 29508382-Ut (B 60 R 7/00) zeigt als Transportbehälter einen stationär unter einem Fahrzeugdach hängenden Staukasten, der nach seiner Entfernung aus der Befestigungslage als bewegliche Transportbox nutzbar und wie ein Koffer tragbar ausgebildet ist. Als bevorzugter Anwendungsbereich dieses Transportbehälters werden Reisemobile, Caravans, Campingfahrzeuge im allgemeinen, Reisebusse und auch Flugzeuge betrachtet, insgesamt also sehr großvolumige Fahrzeuge.

Die DE 3407299-A1 (B 60 R 11/02) zeigt eine Heckablage, die als Trägerteil für eine fahrzeugindividuell ausgestaltete Lautsprecherbox nutzbar ist.

Die W0 97/22495 zeigt als Abdeckung für einen Fahrzeugladeraum eine zwischen Fondsitzen und Heckklappe hin- und herbewegbare Rollokonstruktion. Das in unterschiedlichen Raststellungen arretierbare Endstück der Rolloanordnung ist als Ablageschale ausgeführt, die vom Fahrzeuginnenraum oder bei geöffneter Heckklappe auch von einer hinter dem Fahrzeug stehenden Person befüllt werden kann. Es wird damit eine zusätzliche Ablagemöglichkeit geschaffen, die bei derartigen Rollokonstruktionen an sich im Fahrzeug nicht vorhanden ist. Das nutzbare Ablagevolumen ist jedoch sehr gering.

Aus der gattungsbildenden FR 27 43 035 ist ferner eine als kofferartiger Hohlkörper ausgeführte Abdeckung für einen Fahrzeugladeraum mit wenigstens einem Transportbehälter bekannt, der integraler Bestandteil des Hohlkörpers ist und zur Aufnahme von Ladegut zwischen wenigstens einem Kofferdeckel und einem Kofferboden hergerichtet ist. Ein lösbarer Einsatz in das Fahrzeug ist durch Lagerzapfen gewährleistet.

Konkret ist hier ein Rahmenteil vorgesehen, das über die Lagerzapfen im Fahrzeug positionierbar ist. An einer Rahmenunterseite dieses Rahmenteils ist eine Wanne entlang einer Schiebeführung verschiebbar geführt. Der Wannenboden bildet hier den Kofferboden aus. Zur Abdeckung des durch die Wanne gebildeten Hohlraums dient eine Abdeckung als Kofferdeckel, die aus mehreren untereinander mittels Klappschamieren verbundenen Deckelelementen gebildet ist. Die Deckelelemente sind am Rahmenteil verschiebbar und verschwenkbar angelenkt, wobei ein Teil dieser Deckelelemente Gleitsteine aufweist, die zum Aufstellen der Deckelelemente in am Rahmenteil ausgebildeter Verschiebenuten geführt sind. Ein derartiger Aufbau weist eine Vielzahl von Bauteilen auf und ist daher ersichtlich aufwendig.

Aufgabe der Erfindung ist es daher, eine Abdeckung zu Schaffen, die bei gleichzeitig einfachem Aufbau eine sehr hohe Funktionalität aufweist.

Diese Aufgabe wird gelöst mit den Merkmalen des Patentanspruchs 1. Die Unteransprüche betreffen besonders zweckmäßige Weiterbildungen der Erfindung.

Gemäß Anspruch 1 sind die Lagerzapfen zur Lagerung am Fahrzeug einerseits und zur Lagerung zwischen Kofferdeckel und Kofferboden andererseits hergerichtet.

Ein derartiger Aufbau weist eine sehr hohe Funktionalität auf, da die Lagerzapfen in einer Doppelfunktion einerseits zur Lagerung der Abdeckung in den z. B. ursprünglich für die Heckablage eingerichteten Lageraufnahmen der Laderaumwandungen dienen und andererseits selber gleichzeitig die Lagerung für den Kofferdeckel bilden, d. h. z. B. den bereits vorhandenen Lagerungselementen der Heckablage ihrerseits Lagerelemente zur Verfügung stellen.

Die erfindungsgemäße Konzeption erlaubt daher vorteilhaft auch die Verwendung von ohnehin schon in Fahrzeugen befindlichen Hutablagen bzw. Gepäckablagen als Kofferdeckel. Insgesamt gesehen ist daher ein derartiger Aufbau für die Nachrüstbarkeit, Handhabung und passgenaue bzw. klapperfreie Unterbringung im Fahrzeug von besonderer Bedeutung. Der lösbare Einsatz mittels Lagerzapfen ist so ausgeführt, dass in Einbaulage der Kofferdeckel allein zwischen wenigstens einer Öffnungsstellung und einer Schließstellung betätigbar ist oder der Kofferdeckel gemeinsam mit dem Kofferboden aus der Einbaulage herausbewegbar ist. Hierdurch wird sichergestellt, dass die Zugänglichkeit des Transportbehälters sowohl bei innerhalb des Fahrzeugs angeordneter Abdeckung als auch bei aus dem Fahrzeug herausgenommener Abdeckung gewährleistet ist. Damit kann außerdem ein und dieselbe Abdeckung zum einen als vom Fahrzeug separierbarer Transportkoffer und zum anderen als durch eine von Hand oder von der Heckklappe über Zugbänder verschwenkbare Gepäckraumabdeckung genutzt werden. Mit dieser Konfiguration kann der Kofferdeckel auch als Innenverkleidungsteil und/oder Fahrzeugzubehörteil ausgeführt werden. Demgegenüber nimmt der Kofferboden die Funktion einer Laderaumschottwand. Der Kofferdeckel ist somit ein wesentliches Variationsmerkmal, durch das im Wesentlichen baugleich ausgeführte Abdeckungen zum einen auf das Fahrzeuginnenraumdesign abgestimmt werden können und zum anderen kundenspezifische Wünsche nach Zubehörteilen wie Lautsprecherboxen oder dergleichen erfüllbar sind. Außerdem kann beispielsweise der Kofferboden für verschiedene Ausstattungsvarianten einer Fahrzeugbaureihe als Standardteil ausgeführt sein, weil er im normalen Fahrbetrieb des Fahrzeuges in der Regel nicht sichtbar ist.

In vorteilhafter Weise kann die erfindungsgemäß ausgeführte Abdeckung in unterschiedlicher Weise vermarktet werden. Vorstellbar ist in einer ersten Variante der Verkauf eines Teilsystems, das im Wesentlichen die zum Kofferboden und damit zur Laderaumschottwand gehörenden Funktionen umfasst. Dieser Kofferboden ist auf die Einbaugegebenheiten einer bestimmten Fahrzeugreihe abgestimmt und kann ohne weiteres als Schublade oder Schwenkklappe in bereits vorhandene Lagerungen eingelegt werden. Der Kunde kann dann das bei ihm vorhandene Heckablagenteil mit dieser Grundausstattung verbinden. Alternativ kann vom Fahrzeughersteller oder Zubehörlieferanten auch ein Komplettsystem angeboten werden, das den Kofferboden und den Kofferdeckel gemeinsam umfasst. Das Komplettsystem selbst kann bei gleichen Einbaumaßnahmen in unterschiedlichen Nutzversionen angeboten werden. Als Grundversion kann beispielsweise eine als Notfallkoffer ausgeführte Abdeckung bereitgestellt werden, die zumindest zur Aufnahme von Verbandskästen und Warndreiecken hergerichtet ist und gegebenenfalls darüber hinaus auch Bordwerkzeug geordnet bereithält. Ergänzend oder alternativ sind Systeme einsetzbar, die zumindest Teile der Abdeckung nach Art einer Babywickeltasche, eines Picknickkorbes, eines Campingsets, eines Hobbygerätekoffers oder ähnliches mehr ermöglichen. Insbesondere bei Fahrzeugen, die bereits für Verbandskästen und Warndreiecke eine geeignete Unterbringungsmöglichkeit bereithalten, können hier auf ausgesuchte Zielgruppen zugeschnittene Transportbehälter angeboten werden. Auch eine Anordnung aus Lautsprecherboxen und Ablagefach kann vorteilhaft in der Weise vorgesehen sein, dass die Lautsprecherboxen zwischen sich das wenigstens eine Ablagefach einschließen.

Von herausgehobener Bedeutung ist auch die Erfindungsweiterbildung gemäß Anspruch 7. Zur Vermeidung eines sogenannten Kabelsalates im Laderaum und/oder in der Insassenzelle sind - vorzugsweise genormte und/oder standardisierte - Anschlussmöglichkeiten für elektrischen Strom dem Kofferdeckel und/oder dem Kofferboden zugeordnet. Der Anschluss kann dabei vorteilhaft als Niedervolt-Steckbuchse oder als 200-250 Volt-Wechselstromanschluss ausgeführt sein. Vorzugsweise ist der Kofferboden als Standardbauteil ausgeführt, in das wenigstens ein Ablagefach oder ein Satz von Ablagefächem einsetzbar ist, das bzw. der mit wenigstens einer an das Standardbauteil angepassten Normanschlusskonfiguration ausgeführt ist.

Als Weiterbildung der Erfindung ist gemäß Anspruch 8 eine Nutzbarkeit der Abdeckung als Ton- und/oder Bildwiedergabegerät gleichermaßen innerhalb und außerhalb des Fahrzeugs vorgesehen. Bei der Ausführungsform als Ton- und/oder Bildwiedergabegerät kann auch besonders vorteilhaft vorgesehen sein, dieses zwischen zwei Lautsprecherboxen angeordnet ist. Abweichend von der in der DE 3407299-A1 gezeigten Lösung ist das elektronische Gerät also nicht auf der Heckablage befestigbar, sondern ist die Heckablage selbst. Insbesondere bei einer Ausführung der Abdeckung als Campingset kann das Elektrogerät auch als ein flach bauender Heizplatten-Kleinherd ausgeführt sein.

Die Erfindung liefert positive Beiträge insbesondere für die Nutzbarkeit der Ablage auch außerhalb des Fahrzeugs, ohne das Einbußen für die Verwendung im Innenraum des Fahrzeugs hingenommen werden müssen.

Insbesondere bei Kompaktfahrzeugen sind Abdeckungen gemäß Patentanspruch 13 von Vorteil. Durch eine zumindest teilweise Rücksetzung und/oder Schräganstellung des Kofferbodens kann gegenüber herkömmlichen Abdeckungen der Abstand zur Ladekante des Fahrzeugs vergrößert und damit dessen Beladbarkeit verbessert werden, ohne dass der Abdeckung selbst nennenswert Staumöglichkeiten genommen werden. Das in diesem Falle reduzierte Stauvolumen in der Abdeckung ist immer noch ausreichend für die Unterbringung von Kleinteilen (beispielsweise Werkzeug etc.) oder flachen Gegenständen (beispielsweise Karten etc.). Diese Variante ist vorteilhaft kombinierbar mit der Lösung gemäß Anspruch 1.

Vorteilhafte Ausführungsbeispiele der Erfindung sind in der Zeichnung dargestellt. Es zeigt
- Figur 1:: das bevorzugte Anwendungsgebiet für die erfindungsgemäße Abdeckung,
- Figur 2:: in einer perspektivischen Darstellung ein erstes Ausführungsbeispiel,
- Figur 3:: in einer vergleichbaren Ansicht ein zweites Ausführungsbeispiel,
- Figur 4a:: eine erste Variante für eine Kombination aus Transportgriff und Transportsicherung,
- Figur 4b:: eine zweite Variante für eine Kombination aus Transportgriff und Transportsicherung,
- Figur 4c:: schematisch ein weiterer Verschluss zur Arretierung des Kofferdeckels an dem Kofferboden,
- Figur 5:: eine als Musikgerät ausgeführte Abdeckung,
- Figur 6:: einen Kofferboden für eine als Notfallkoffer ausgebildete Abdeckung.
Gleiche Bauteile oder Bauteilabschnitte weisen in allen Figuren die gleiche - gegebenenfalls je Ausführungsbeispiel jeweils um 100 erhöhte - Bezifferung auf.

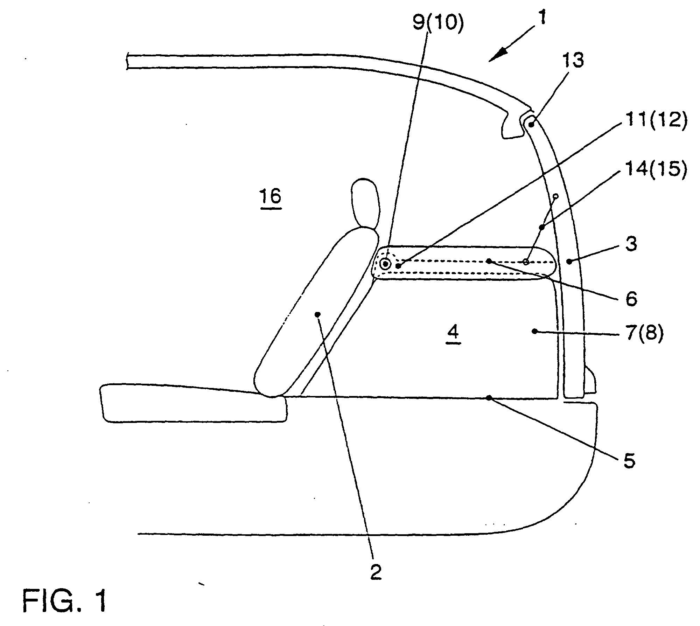

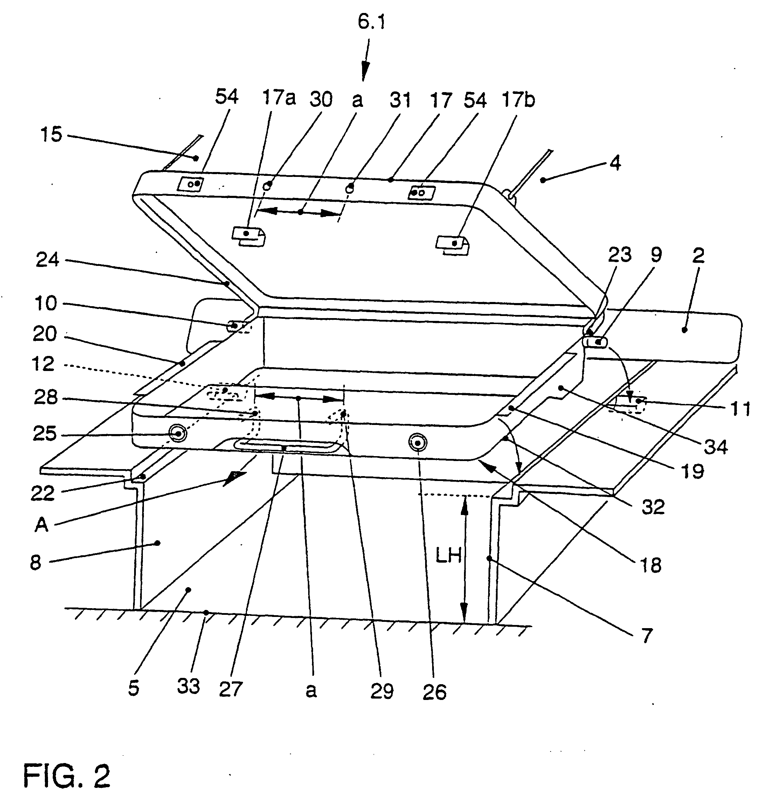

Man erkennt in Figur 1 die Heckpartie eines schematisch dargestellten und insgesamt mit 1 bezeichneten Fahrzeuges, bei dem zwischen einer Fondsitzlehne 2 und einer verschwenkbaren Heckklappe 3 ein Laderaum 4 vorgesehen ist, der nach unten durch einen Kofferrraumboden 5 und nach oben durch eine Abdeckung 6 begrenzt ist. Diese Abdeckung 6 liegt auf Seitenwandverkleidungen 7, 8 auf und ist an diesen über Lagerzapfen 9, 10 in Lageraufnahmen 11, 12 schwenkbeweglich aufgenommen. Durch Bewegung der Heckklappe 3 um ein Klappenscharnier 13 kann die Addeckung 6 insgesamt oder wenigstens ein deckelartig ausgeführtes Teil durch Zugbänder 14, 15 angehoben werden. Die Abdeckung 6 schottet eine Insassenzelle 16 des Fahrzeugs 1 von dem Laderaum 4 ab. Die Gestaltung dieser als Koffer oder Elektrogerät ausgeführten Abdeckung 6 wird im Detail anhand der Figuren 2 bis 6 näher erläutert.

Figur 2 zeigt eine insgesamt mit 6.1 bezeichnete Abdeckung, deren wesentliche Elemente hier ein Kofferdeckel 17 und ein Kofferboden 18 sind. An letzterem sind die Lagerzapfen 9, 10 integral angeformt und in die Lageraufnahmen 11, 12 einsetzbar. Weitere Tragfunktionen übernehmen randseitig abgestellte Anlageflansche 19 und 20, die auf Gegenprofilkanten 21, 22 auflegbar sind. Damit ist der Kofferboden 18 eindeutig lagefixiert und darüber hinaus auch gegenüber den Seitenteilen 7, 8 vor der Sitzbank 2 verschwenkbar. Am Kofferdeckel 17 sind Lagerringe 23, 24 vorgesehen, die drehbeweglich mit den Lagerzapfen 9, 10 verbunden sind. Die Breite der Lagerringe 23, 24 ist so bemessen, dass nach Einsatz der gesamten Abdeckung 6.1 zwischen dieser in Teile 7 und 8 der Kofferdeckel 17 unabhängig vom Kofferboden 18 schwenkbeweglich ist. Durch unterschiedliche Arretiermechanismen kann dafür gesorgt werden, dass der Kofferdeckel 17 und der Kofferboden 18 lösbar miteinander verbunden sind. Je nach Kundenwunsch kann die Arretierung dabei so ausgelegt sein, dass beispielsweise beim Anheben der Heckklappe 3 entweder nur der Kofferdeckel 17 allein oder aber der Kofferdeckel 17 mit dem Kofferboden 18 zusammen in eine Schwenkstellung übergebt.

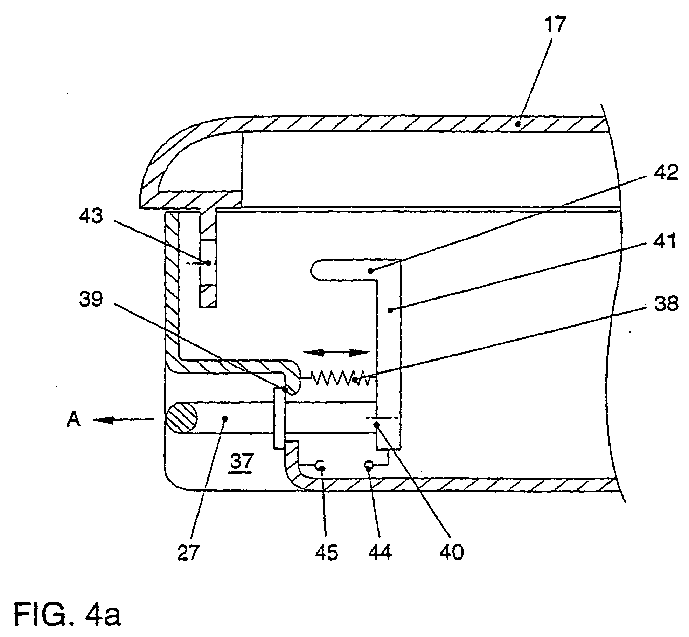

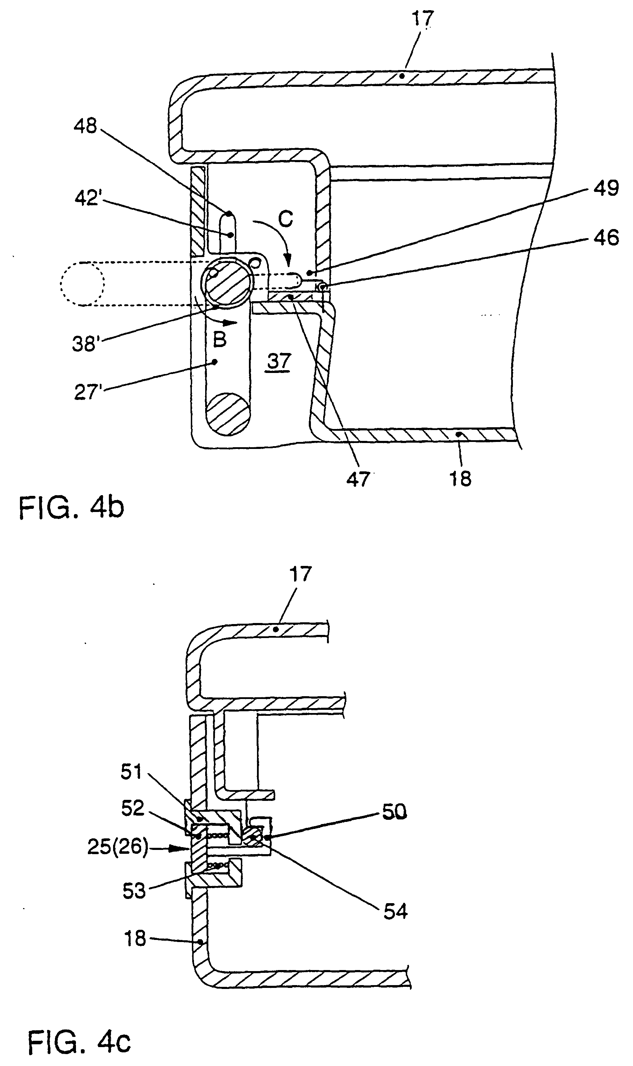

Die Arretierung von Kofferdeckel 17 und Kofferboden 18 kann auf unterschiedliche Weise erfolgen. So ist beispielsweise hier ein von Reisekoffern bekanntes Verschlussprinzip dargestellt, bei dem mittels Betätigung von Druckknöpfen 25, 26 eine Rastverbindung der beiden Kofferteile 17, 18 zueinander hergestellt werden kann. Nähere Details hierzu werden in Figur 4c schematisch dargestellt. Alternativ oder ergänzend kann eine Verrastung mittels eines Transportgriffes 27 erfolgen, der sich bei der in der Zeichnung dargestellten Ruhestellung innerhalb der Kontur der Abdeckung 6.1 befindet. In dieser Ruhestellung ist die Arretierung zum Kofferdeckel 17 aufgehoben. Durch Herausziehen gemäß Pfeil A können Rasthaken 28, 29 in Rastprofile 30, 31 des Kofferdeckels 17 eingreifen und verriegeln so die beiden Kofferteile 17, 18 für den Transport selbsttätig miteinander. Der Nutzer der Abdeckung 6.1 muss sich um die Verliersicherheit des darin untergebrachten Transportgutes also nicht aktiv kümmern, sondern bekommt dies durch die für den Transport ohnehin notwendige Betätigung des Transportgriffes 27 gleichsam selbsttätig bereitgestellt. Zu näheren Details dieser Verrastung wird auf die Beschreibung zu den Figuren 4a und 4b verwiesen.

Von besonderer Bedeutung bei dem in der Figur 2 dargestellten Ausführungsbeispiel ist auch eine Rücksetzung 32, durch die die Abdeckung 6.1 zur Ladekante 33 eine vergrößerte Ladehöhe LH zulässt. Demgegenüber ist eine Vertiefung 34 mehr der Sitziehne 2 zugeordnet. Für die Beladung von sperrigen Ladegütern (beispielsweise Getränkekisten) ist dieser Bereich weniger relevant. Gegebenenfalls kann die Rücksetzung 32 auch auf einen Teilbereich des Kofferbodens 18 beschränkt sein, der sich hinsichtlich seiner Erstreckung in Fahrzeugquerrichtung an den Abmessungen handelsüblicher Getränkekisten orientiert. Oberhalb der Vertiefung 34 sind hier noch Klemmschellen 17a, 17b am Kofferdeckel 17 angeformt oder befestigt, um beispielsweise einen hier nicht gezeigten Regenschirm lagefixiert unterbringen zu können.

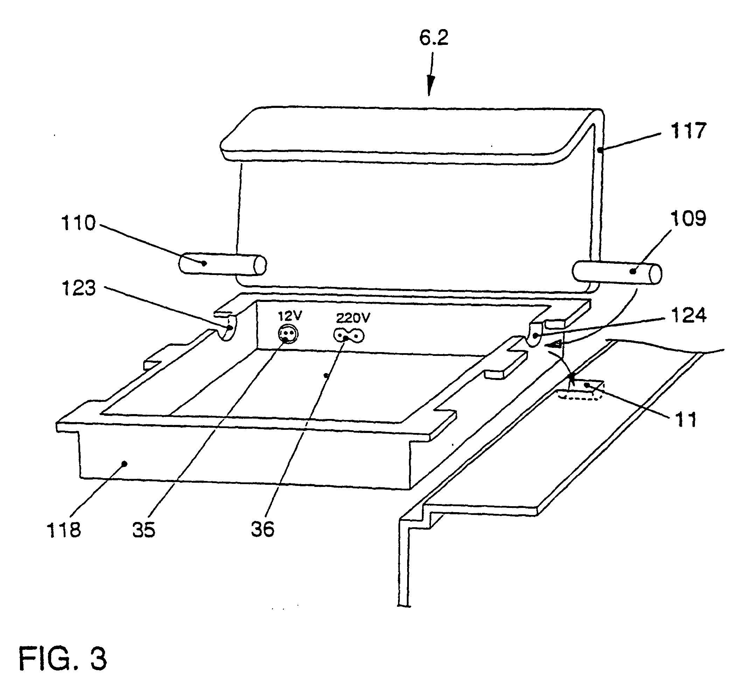

Das in Figur 3 dargestellte Ausführungsbeispiel zeigt eine als Nachrüstsatz konzipierte Abdeckung 6.2. Mit 117 ist als Kofferdeckel eine ohnehin im Fahrzeug vorhandene Gepäckablage bezeichnet, an der Lagerzapfen 109 und 110 angeformt sind. Als Kofferboden ist hier eine Ablagemulde 118 vorgesehen, die über Lagerschalen 123, 124 lösbar mit der Gepäckablage 117 gekoppelt werden kann. Der auf diese Weise erzeugte Zusammenbau kann gemeinsam in die Lageraufnahmen 11, 12 (siehe hierzu auch Figur 2) eingesetzt werden. Als wesentliches Zusatzausstattungsmerkmal und eigenständige Lösung sind der Ablagemulde 118 Stromanschlussbuchsen zugeordnet, von denen ein Niedervoltanschluss mit 35 und ein Wechselstrom-Netzanschluss mit 36 bezeichnet ist. Diese Buchsen sind über hier nicht weiter dargestellte Leitungssysteme mit dem Bordnetz des Fahrzeugs verbindbar. Insbesondere die Anschlussbuchse 36 ist interessant für solche Anwendungsfälle, bei denen die gesamte Abdeckung 6.2 aus dem Fahrzeug entfernt wird und beispielsweise auf einem Campingplatz oder innerhalb einer Garage an ein konventionelles Wechselspannungsnetz angeschlossen werden soll. Zu diesem Zweck kann in die Abdeckung 6.2 auch ein sogenanntes Netzteil bzw. ein Transformator (200 - 250V Wechselstrom / 3-24V Gleichstrom) integriert sein.

Zur näheren Erläuterung der Verriegelungsfunktion des in Figur 2 dargestellten Transportgriffes 27 ist in Figur 4a eine Schnittzeichnung dargestellt. Der dort in der Ruhestellung befindliche Transportgriff 27 befindet sich innerhalb einer bodenseitigen Mulde 37 und wird durch das Zusammenwirken einer Druckfeder 38 und eines Anschlagringes 39 in dieser Position gehalten. An den innenraumseitigen Enden 40 des Transportgriffes 27 sind Verriegelungsarme 41 befestigt, die mit einem angeformten Verriegelungshaken 42 in eine Rastausnehmung 43 hineinbewegt werden können, die ihrerseits dem Kofferdeckel 17 zugeordnet ist. Diese Verrastungsstellung wird erreicht, wenn beim Herausnehmen der gesamten Abdeckung 6.1 der Transportgriff 27 in Pfeilrichtung A gegen die Wirkung der Druckfeder 38 herausgezogen wird. Die Endposition für den Transportgriff 27 ist dann erreicht, wenn ein Clipshaken 44 am Verriegelungsarm 41 in einen Clipsknopf 45 einrastet. Die vorstehend beschriebene Clipsverbindung ist so ausgelegt, dass sie einerseits den Rückstellkräften aus der Druckfeder 38 standhalten kann, andererseits aber von Handkraft relativ leicht überdrückbar ist. Mit dieser Konstruktion ist gewährleistet, dass nach dem Abstellen der aus dem Fahrzeug 1 entnommenen Ablage der Kofferdeckel 17 sich nicht vom Kofferboden 18 lösen kann, wenn die gesamte Abdeckung zuvor hochkant abgelegt wurde. Es wird hier ausdrücklich darauf verwiesen, dass die in Figur 4a gezeigten Zusammenhänge rein schematischer Natur sind. Die konstruktive Umsetzung kann im Einzelfall höchst unterschiedlich ausgeführt sein.

Ein alternatives Verriegelungskonzept zeigt beispielsweise Figur 4b. Dort ist der Transportgriff 27' drehgelagert und wird durch eine in Richtung des Drehpfeiles B vorgespannte Drehfeder 38' in einer Ruhestellung fixiert, wie sie aus der Zeichnung ersichtlich ist. In dieser Ruhestellung folgt eine Verrastung zwischen Kofferdeckel 17 und Kofferboden 18 lediglich über eine Clipsanordnung 46, die von Hand relativ leicht gelöst werden kann. Diese Clipsanordnung 46 kann auf dem gesamten Umfang von Kofferdeckel 17 und Kofferboden 18 verteilt sein und ist so bemessen, dass beispielsweise auch bei schrägstehender Abdeckung 6.1 darin untergebrachtes Ladegut keine ungewollte Öffnung herbeiführen kann. Um aber bei einem Gebrauch der Abdeckung 6.1 als tragbaren Koffer eine eindeutige Verriegelung sicherstellen zu können, ist hier an dem Transportgriff 27' ein Verriegelungshebel 42' angeformt, der bei einer gegen die Rückstellkraft der Drehfeder 38' erfolgenden Verschwenkung gemäß Pfeilrichtung C auf einer an dem Kofferdeckel 17 angeformten Haltenasen 47 zur Anlage gebracht wird. Die Geometrie eines Hebelendes 48 ist so ausgeführt, dass für die mit Strichlinien angedeutete Verrastungsposition in einer Rastmulde 49 ebenfalls eine von Handkraft leicht überdrückbare Verrastung sichergestellt ist, die aber der von der Drehfeder 38' ausgeübten Rückstellkraft standhält.

Ergänzend oder alternativ zu den vorstehend beschriebenen Transportgriffarretierungen können auch Schlossverriegelungen vorgesehen werden, wie sie bereits in der Figur 2 mit den Ziffern 25 und 26 grob angedeutet worden sind. Vorstellbar ist beispielsweise eine Arretierung mittels eines Verriegelungshebels 50, der mit einem in einer Aufnahmehülse 51 geführten Druckknopf 52 gegen die Wirkung einer Druckfeder 53 betätigbar ist. Der Verriegelungshebel 50 umgreift einen Verriegelungshaken 54, der seinerseits am Kofferdeckel 17 gelagert ist. Auch diese Zeichnung ist rein schematischer Natur. Es können hier konventionelle Schlosskonstruktionen eingesetzt werden, wie sie beispielsweise von Reisekoffern, Aktenkoffem oder Werkzeugkoffern bekannt sind.

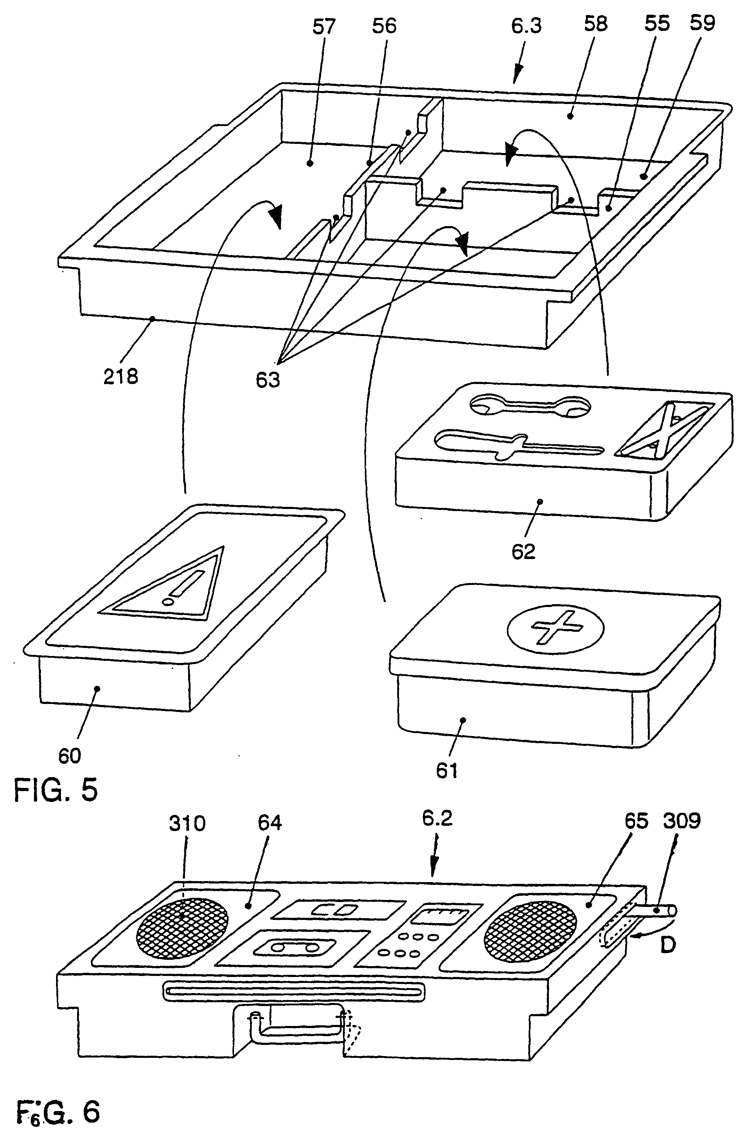

Figur 5 zeigt als bevorzugtes Ausführungsbeispiel für eine Abdeckung 6.3 als Kofferboden eine Modulkiste 218, die durch hier eingeformte Trennwände 55, 56 in standardisierte Aufnahmefächer 57 bis 59 unterteilt ist. An die Konturen diese Aufnahmefächer angepasst sind als Bordausrüstungsgegenstände beispielsweise eine Aufnahmebox 60 für ein Warndreieck, ein Verbandskasten 61 sowie ein Bordwerkzeugsatz 62. Greifaussparungen 63 in den Trennwänden 55 und 56 ermöglichen eine vereinfachte Ablage und Entnahme der vorstehend beschriebenen Ausrüstungsgegenstände. Die Modulkiste 218 muss aber nicht zwangsläufig nur als Notfallkoffer konzipiert sein, sondern kann auch für andere Anwendungen genutzt werden. Vorstellbar sind Einsatzteile nach Art von Flüssigkeitsbehältern oder Sortierkästen für unterschiedlichste Anwendungsfälle. Als typische Transportgüter in Betracht gezogen werden können unterschiedlichste Sportgeräte, Getränkebehältnisse, Taschen- bzw. Bordlampen, Hygieneartikel (insbesondere für Kleinkinder), Wickeltücher, Kinderspielzeug, Schreibwaren, Zeitschriften oder dergleichen mehr.

Gemäß einer besonders vorteilhaften Weiterbildung der Erfindung kann eine solche Modulkiste 218 auch als Standardbefestigung für Audiogeräte hergerichtet sein. Zu diesem Zweck ist die Modulkiste 218 mit Stromanschlüssen (siehe Figur 2, Positionen 35 und 36) herzurichten. Gegebenenfalls sind ergänzend auch Anschlüsse für Kopfhörer oder Lautsprecherbuchsen vorzusehen. In eine solche Modulkiste 218 könnten dann beispielsweise tragbare Cassettenrecorder oder Radios abgelegt werden, die während der Fahrt von Fondinsassen benutzbar sind.

Bei einer anderen Erfindungsweiterbildung ist - wie in Figur 6 dargestellt - ein Gerät der Unterhaltungselektronik selbst die Heckablage. Dessen Außenkontur ist fahrzeugindividuell so gestaltet, dass es zur Stauraumabdeckung zwischen die Seitenteile 7 und 8 eingepasst werden kann. Eine eindeutige Lagefixierung können beispielsweise Lagerzapfen 309 und 310 sicherstellen, die in die Lageraufnahmen 11, 12 einsteckbar sind. Nach Entfernung aus dem Fahrzeug 1 sind die Lagerzapfen 309, 310 gemäß Pfeilrichtung in die Kontur der Abdeckung 6.4 hineinverlegbar. Das in Figur 6 gezeigte Ausführungsbeispiel ist ein tragbares Kombi-Musikgerät, das beispielsweise einen CD-Player, ein Cassetten-Deck und ein Radioteil umfasst. Lautsprecherboxen 64, 65 sind entweder in das Gerätegehäuse integriert oder können als separate Bauteile mit diesem nur lose verbunden sein, um dann für einen Betrieb außerhalb des Fahrzeugs gegebenenfalls auch vom eigentlichen Kerngerät entfernt aufgestellt werden zu können. Auch für die Abdeckung 6.4 wird ein Modulkonzept dergestalt vorgeschlagen, dass standardisierte Lautsprecher- und Musikwiedergabegeräte in fahrzeugindividuell gestaltete Grundträger eingepasst werden.

Die Erfindung ist nicht auf die in der Zeichnung dargestellten Ausführungsbeispiele beschränkt. Die unterschiedlichen Konzepte sollen hier lediglich andeuten, mit welch hoher Variabilität die Erfindung an Fahrzeugen unterschiedlichster Art verwendet werden kann.

## Patentansprüche

1. Als kofferartiger Hohlkörper ausgeführte Abdeckung (6.1-6.4) für einen Fahrzeugladeraum (4) mit wenigstens einem Transportbehälter, der integraler Bestandteil des Hohlkörpers ist und zur Aufnahme von Ladegut zwischen wenigstens einem Kofferdeckel (17) und einem Kofferboden (18) hergerichtet ist, wobei ein lösbarer Einsatz in das Fahrzeug (1) durch Lagerzapfen (9, 10; 109, 110; 309, 310) gewährleistet ist,
**dadurch gekennzeichnet,**
**dass** die Lagerzapfen zur Lagerung am Fahrzeug einerseits und zur Lagerung zwischen Kofferdeckel (17) und Kofferboden (18) andererseits hergerichtet sind.

2. Abdeckung nach Anspruch 1, **dadurch gekennzeichnet, dass** der lösbare Einsatz des Kofferdeckels (17) und/oder des Kofferbodens (18) ergänzend durch ein Kantenprofil gewährleistet ist.

3. Abdeckung nach Anspruch 1 oder 2, **dadurch gekennzeichnet, dass** sie mittels der Lagerzapfen (109, 110 oder 309, 310) zwischen einer Lagerstellung und einer Ruhestellung verstellbar ist.

4. Abdeckung nach einem der Ansprüche 1 bis 3, **dadurch gekennzeichnet, dass** an dem Kofferdecket (17) und/oder an dem Kofferboden (18) Haltemittel vorgesehen sind, die zur Verbindung mit an einer Fahrzeugklappe (3) befestigten oder befestigbaren Zugmitteln (14, 15) hergerichtet sind.

5. Abdeckung nach einem der Ansprüche 1 bis 4, **dadurch gekennzeichnet, dass** der Kofferdeckel (17) in unterschiedlichen Schwenkstellungen gegenüber dem Kofferboden (18) arretierbar ist.

6. Abdeckung nach wenigstens einem der Ansprüche 1 bis 5, **dadurch gekennzeichnet,** in Einbaulage wahlweise der Kofferdeckel (17) allein in Öffnungs- oder Schließstellung bewegbar ist oder der Kofferdeckel (17) gemeinsam mit dem Kofferboden (18) aus der Einbaulage heraus bewegbar ist.

7. Abdeckung nach einem der Ansprüche 1 bis 6, **dadurch gekennzeichnet, dass** der Kofferdeckel (17) und/oder der Kofferboden (18) wenigstens einen Anschluss für elektrischen Strom aufweist.

8. Abdeckung nach einem der Ansprüche 1 bis 7, **dadurch gekennzeichnet, dass** durch den Hohlkörper das Gehäuse für ein Elektrogerät zumindest abschnittsweise gebildet ist.

9. Abdeckung nach wenigstens einem der Ansprüche 1 bis 8, **dadurch gekennzeichnet, dass** der Kofferdeckel (17) oder der Kofferboden (18) wenigstens ein Ablagefach aufweisen oder durch den Kofferdeckel (17) und den Kofferboden (18) gemeinsam ein Ablagefach gebildet ist.

10. Abdeckung nach wenigstens einem der Ansprüche 1 bis 9, **dadurch gekennzeichnet, dass** der Kofferdeckel (17) als Oberseite der Abdeckung (6.1 - 6.3) nach Art eines Innenverkleidungs- und/oder Innenausstattungsteils gebildet ist und/oder dass der Kofferboden (18) als Unterseite nach Art einer Laderaumschottwand ausgebildet ist und/oder dass der Kofferdeckel (17) mittels wenigstens einer Schlossanordnung (25, 26) gegenüber dem Kofferboden (18) arretierbar ist.

11. Abdeckung nach wenigstens einem der Ansprüche 1 bis 10, **dadurch gekennzeichnet, dass** sie nach Art einer Heckablage bzw. Hutablage gebildet ist und/oder dass der Kofferdeckel (17) durch eine im Fahrzeug ohnehin vorhandene Heckablage (117) gebildet ist, die zusammen mit einem daran angepassten Kofferboden (118) zur gemeinsamen Unterbringung im Fahrzeug (1) hergerichtet ist.

12. Abdeckung nach einem der Ansprüche 1 bis 11, **dadurch gekennzeichnet, dass** der Kofferboden (18) im Bodenbereich eine die Unterbringung größeren Ladegutes im Fahrzeugladeraum (4) ermöglichende Rücksetzung (32) aufweist, wobei vorzugsweise die Rücksetzung (32) hinsichtlich ihrer Ausdehnung in Fahrzeugquerrichtung auf handelsübliche Getränkekästen abgestimmt ist.

## Claims

1. Cover (6.1 - 6.4), designed as a suitcase-like hollow body, for a vehicle luggage compartment (4), comprising at least one transport container which is an integral part of the hollow body and is designed to receive luggage between at least one suitcase lid (17) and a suitcase bottom (18), with detachable use in the vehicle (1) being ensured by bearing pins (9, 10; 109, 110; 309, 310), **characterized in that** the bearing pins are designed for mounting on the vehicle, on the one hand, and for mounting between the suitcase lid (17) and suitcase bottom (18), on the other hand.

2. Cover according to Claim 1, **characterized in that** the detachable use of the suitcase lid (17) and/or of the suitcase bottom (18) is additionally ensured by an edge section.

3. Cover according to Claim 1 or 2, **characterized in that** it can be adjusted by means of the bearing pins (109, 110 or 309, 310) between a bearing position and a position of rest.

4. Cover according to one of Claims 1 to 3, **characterized in that** retaining means are provided on the suitcase lid (17) and/or on the suitcase bottom (18) and are designed to be connected to tensioning means (14, 15) which are or can be fixed to a vehicle tailgate (3).

5. Cover according to one of Claims 1 to 4, **characterized in that** the suitcase lid (17) can be locked in various pivoting positions relative to the suitcase bottom (18).

6. Cover according to at least one of Claims 1 to 5, **characterized in that**, in the installed position, either the suitcase lid (17) alone can be moved into an open or closed position or the suitcase lid (17) can be moved out of the installed position jointly with the suitcase bottom (18).

7. Cover according to one of Claims 1 to 6, **characterized in that** the suitcase lid (17) and/or the suitcase bottom (18) comprises at least one connection for electrical current.

8. Cover according to one of Claims 1 to 7, **characterized in that** the hollow body forms at least part of the housing for an electrical appliance.

9. Cover according to at least one of Claims 1 to 8, **characterized in that** the suitcase lid (17) or the suitcase bottom (18) possesses at least one storage compartment or a storage compartment is formed jointly by the suitcase lid (17) and the suitcase bottom (18).

10. Cover according to at least one of Claims 1 to 9, **characterized in that** the suitcase lid (17) is formed as the top of the cover (6.1 - 6.3) in the manner of an internal lining and/or internal trim part, and/or **in that** the suitcase bottom (18) is formed as an underside in the manner of a luggage compartment partition, and/or **in that** the suitcase lid (17) can be locked in relation to the suitcase bottom (18) by means of at least one lock arrangement (25, 26).

11. Cover according to at least one of Claims 1 to 10, **characterized in that** it is formed in the manner of a rear shelf or parcel shelf, and/or **in that** the suitcase lid (17) is formed by a rear shelf (117) which is any case present in the vehicle and is designed to be jointly accommodated in the vehicle (1) together with a suitcase bottom (118) adapted thereto.

12. Cover according to one of Claims 1 to 11, **characterized in that** the suitcase bottom (18) comprises, in the bottom region, a recessed portion (32) permitting relatively large luggage to be accommodated in the vehicle luggage compartment (4), the recessed portion (32) preferably being designed, in terms of its extent in the transverse direction of the vehicle, to match commercially available beverage crates.

## Revendications

1. Recouvrement (6.1-6.4) réalisé sous forme de corps creux de type valise pour un espace de chargement (4) d'un véhicule, comprenant au moins un récipient de transport qui fait partie intégrante du corps creux et qui est aménagé pour recevoir un produit à charger entre au moins un couvercle de valise (17) et un fond de valise (18), une insertion réversible étant garantie dans le véhicule (1) par des tourillons (9, 10; 109, 110; 309, 310),
**caractérisé en ce que**
les tourillons étant prévus d'une part pour le support sur le véhicule et d'autre part pour le support entre le couvercle de valise (17) et le fond de valise (18).

2. Recouvrement selon la revendication 1, **caractérisé en ce que** l'insertion réversible du couvercle de valise (17) et/ou du fond de valise (18) est garantie de manière complémentaire par un profil d'arête.

3. Recouvrement selon la revendication 1 ou 2, **caractérisé en ce qu'**il peut être déplacé au moyen des tourillons (109, 110 ou 309, 310) entre une position de stockage et une position de repos.

4. Recouvrement selon l'une quelconque des revendications 1 à 3, **caractérisé en ce que** des moyens de retenue sont prévus sur le couvercle de valise (17) et/ou sur le fond de valise (18), lesquels sont prévus pour être connectés à des moyens de traction (14, 15) fixés ou susceptibles d'être fixés à une trappe du véhicule (3).

5. Recouvrement selon l'une quelconque des revendications 1 à 4, **caractérisé en ce que** le couvercle de valise (17) peut être bloqué dans différentes positions de pivotement par rapport au fond de valise (18).

6. Recouvrement selon au moins l'une quelconque des revendications 1 à 5, **caractérisé en ce que** dans la position d'installation, selon le choix, le couvercle de valise (17) peut être déplacé seul dans la position d'ouverture ou de fermeture, ou le couvercle de valise (17) conjointement avec le fond de valise (18) peut être sorti de la position d'installation.

7. Recouvrement selon l'une quelconque des revendications 1 à 6, **caractérisé en ce que** le couvercle de valise (17) et/ou le fond de valise (18) présentent au moins un raccord pour un courant électrique.

8. Recouvrement selon l'une quelconque des revendications 1 à 7, **caractérisé en ce que** le boîtier pour un appareil électrique est formé au moins en partie par le corps creux.

9. Recouvrement selon au moins l'une quelconque des revendications 1 à 8, **caractérisé en ce que** le couvercle de valise (17) ou le fond de valise (18) présentent au moins un compartiment de rangement ou **en ce qu'**un compartiment de rangement commun est formé par le couvercle de valise (17) et le fond de valise (18).

10. Recouvrement selon au moins l'une quelconque des revendications 1 à 9, **caractérisé en ce que** le couvercle de valise (17) est formé en tant que côté supérieur du recouvrement (6.1-6.3) à la manière d'une partie d'habillage intérieur et/ou d'une partie d'équipement intérieur et/ou **en ce que** le fond de valise (18) est réalisé en tant que côté inférieur à la manière d'une paroi de cloison isolante de l'espace de chargement et/ou **en ce que** le couvercle de valise (17) peut être bloqué au moyen d'au moins un agencement de serrure (25, 26) par rapport au fond de valise (18).

11. Recouvrement selon au moins l'une quelconque des revendications 1 à 10, **caractérisé en ce qu'**il est formé à la manière d'une tablette arrière ou d'une plage arrière et/ou **en ce que** le couvercle de valise (17) est formé par une tablette arrière (117) existant déjà dans le véhicule, qui est prévue, conjointement avec un fond de valise (118) adapté à celle-ci, pour être montée conjointement dans le véhicule (1).

12. Recouvrement selon l'une quelconque des revendications 1 à 11, **caractérisé en ce que** le fond de valise (18) présente, dans la région du fond, un retrait (32) permettant de placer des produits à charger relativement gros dans l'espace de chargement (4) du véhicule, le retrait (32) étant de préférence adapté, en ce qui concerne son étendue dans la direction transversale du véhicule, à des caisses de boisson usuelles dans le commerce.
